(19) Europäisches Patentamt / European Patent Office / Office européen des brevets

(11) **EP 3 830 752 B1**

(12) **EUROPÄISCHE PATENTSCHRIFT**

(45) Veröffentlichungstag und Bekanntmachung des Hinweises auf die Patenterteilung:
**06.09.2023   Patentblatt 2023/36**

(21) Anmeldenummer: **19739224.4**

(22) Anmeldetag: **03.07.2019**

(51) Internationale Patentklassifikation (IPC):
*G06V 10/42* (2022.01)      *G06V 10/82* (2022.01)

(52) Gemeinsame Patentklassifikation (CPC):
**G06V 10/454; G06V 10/764; G06V 10/82;**
G06V 2201/03

(86) Internationale Anmeldenummer:
**PCT/EP2019/067841**

(87) Internationale Veröffentlichungsnummer:
**WO 2020/025245 (06.02.2020 Gazette 2020/06)**

(54) **VERFAHREN UND VORRICHTUNG ZUM ERMITTELN EINER ERKLÄRUNGSKARTE**

METHOD AND DEVICE FOR ESTABLISHING AN EXPLANATION MAP

PROCÉDÉ ET DISPOSITIF POUR DÉTERMINER UNE CARTE DESCRIPTIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2018   DE 102018213056**

(43) Veröffentlichungstag der Anmeldung:
**09.06.2021   Patentblatt 2021/23**

(73) Patentinhaber: **Robert Bosch GmbH**
**70442 Stuttgart (DE)**

(72) Erfinder:
• **WAGNER, Joerg**
**71272 Renningen (DE)**
• **KOEHLER, Jan Mathias**
**70199 Stuttgart (DE)**
• **GINDELE, Tobias**
**8006 Zürich (CH)**
• **HETZEL, Leon**
**33824 Werther (DE)**
• **WIEDEMER, Jakob Thaddaeus**
**89150 Laichingen (DE)**

(56) Entgegenhaltungen:
• **MENGNAN DU ET AL: "Towards Explanation of DNN-based Prediction with Guided Feature Inversion", ARXIV.ORG, CORNELL UNIVERSITY LIBRARY, 201 OLIN LIBRARY CORNELL UNIVERSITY ITHACA, NY 14853, 19. März 2018 (2018-03-19), XP081232932,**

EP 3 830 752 B1

**Beschreibung**

Die Erfindung betrifft Verfahren zum Ermitteln einer Erklärungskarte, ein Computerprogramm, eine Ein- oder Mehrzahl maschinenlesbarer Speichermedien und eine Ein- oder Mehrzahl Computer, ein maschinelles Klassifikationssystem sowie ein Anzeigesystem.

Stand der Technik

Aus der nicht vorveröffentlichten DE 10 2018 205 561 ist eine Vorrichtung zur Klassifizierung einer Netzhaut bekannt, umfassend ein künstliches neuronales Netzwerk mit mindestens einer Faltungsschicht,

wobei die Faltungsschicht eine Mehrzahl von trainierbaren Faltungskernen enthält und zu jedem Faltungskern eine Aktivierungskarte liefert, die diskreten Positionen in der Eingabe der mindestens einen Faltungsschicht jeweils einen Ausgabewert zuordnet, welcher ein Maß für die lokale Übereinstimmung der Eingabe mit dem jeweiligen Faltungskern ist,
wobei der mindestens einen Faltungsschicht mindestens eine Klassifikatorschicht nachgeschaltet ist, die ihre Eingabe mittels trainierbarer Gewichte auf einen Satz Wahrscheinlichkeiten dafür abbildet, dass diese Eingabe zu einer von mehreren vorgegebenen Klassen, insbesondere ob das Gewebe gesund oder krankhaft verändert ist, zugehörig ist,
wobei eine Auswerteeinheit vorgesehen ist, welche dazu ausgebildet ist, durch gewichtete Summation der von der mindestens einen Faltungsschicht erhaltenen Aktivierungskarten mit in einer Aggregationsschicht hinterlegten Gewichten eine Relevanzkarte der Ausgabe der mindestens einen Faltungsschicht zu ermitteln, wobei die Relevanzkarte diejenigen Stellen des Gewebes, die für die Beurteilung maßgeblich gewesen sind, aufzeigt.

Vorteile der Erfindung

Das Verfahren mit den Merkmalen des unabhängigen Anspruchs 1 hat demgegenüber den Vorteil, dass eine verbesserte Ermittlung einer Erklärungskarte ermöglicht wird, die insbesondere eine pixelgenaue Darstellung ermöglicht. Hierdurch wird die in der Erklärungskarte enthaltene Information der menschlichen Wahrnehmung überhaupt erst zugänglich.
Vorteilhafte Weiterbildungen sind Gegenstand der abhängigen Ansprüche.

Offenbarung der Erfindung

Die gegenwärtige Erfindung ist im angehängten Anspruchsatz definiert.
Insbesondere bei einem System zur Unterstützung medizinischer Diagnostik, bei dem mittels eines tiefen neuronalen Netzes aufgrund gewisser Merkmale eines Bildes auf eine mögliche Diagnose erkannt wird, ist es wichtig, einem behandelnden Arzt klar anzuzeigen, welche Teile des Bildes zu dieser Diagnose geführt haben.
In einem ersten Aspekt betrifft die Erfindung daher ein Verfahren zum Ermitteln einer Erklärungskarte_eines Bildes, also der für ein Klassifikationsergebnis maßgeblichen Regionen eines Bildes, welches mittels eines tiefen neuronalen Netzes klassifiziert wird (d.h. das Bild wird einer Klasse aus einer vorgebbaren Mehrzahl von Klassen zugeordnet), in der Pixel des Bildes abhängig davon verändert werden, wie maßgeblich sie für die Klassifikation des Bildes sind, wobei die Erklärungskarte derart gewählt wird, dass eine möglichst kleine Untermenge der Pixel des Bildes verändert werden, was so geschieht, dass die Erklärungskarte, dann, wenn sie dem tiefen neuronalen Netz zur Klassifikation zugeführt wird, möglichst nicht zum gleichen Klassifikationsergebnis führt wie das Bild, wobei die Erklärungskarte derart gewählt wird, dass in Merkmalskarten (Englisch: "feature map") des tiefen neuronalen Netzes eine durch die Erklärungskarte hervorgerufene Aktivierung eine durch das Bild hervorgerufene Aktivierung dann (d.h. bei entsprechender Zuführung zum tiefen neuronalen Netz) im Wesentlichen nicht übersteigt.
Dass die Erklärungskarte möglichst nicht zum gleichen Klassifikationsergebnis führt wie das Bild kann beispielsweise bedeuten, dass möglichen Klassifikationsergebnissen jeweils eine Wahrscheinlichkeit zugeordnet wird, und dass die Wahrscheinlichkeit des gleichen Klassifikationsergebnisses minimiert wird.
Die Veränderung der Pixel kann beispielsweise derart geschehen, dass all jene Pixel des Bildes verändert werden, die maßgeblich für die Klassifikation des Bildes sprechen. Diese Pixel können beispielsweise hervorgehoben oder gelöscht werden.
Das heißt es ist vorgesehen, dass nicht nur das Bild, sondern ebenfalls die Erklärungskarte dem tiefen neuronalen Netz zugeführt werden, wobei die als Ausgangsgröße des tiefen neuronalen Netzes jeweils erhaltenen Klassifikationen möglichst nicht gleich sein sollen.
Ein tiefes neuronales Netz ist hierbei in üblicher Weise ein neuronales Netz, welches eine Mehrzahl von Schichten umfasst.

Dadurch, dass die Erklärungskarte in der Größe des eingehenden Bildes erstellt wird, und nicht in der Größe einer Aktivierungskarte bzw. einer Ausgangsgröße einer (insbesondere der letzten) Konvolutionsschicht erstellt wird, ergibt sich eine besonders genaue Darstellung, da die Erklärungskarte in den beschriebenen alternativen Ansätzen auf die Größe des eingehenden Bildes hochskaliert werden müsste. Relevante Kanten- und Farbinformationen bleiben erhalten

In einer Weiterbildung kann vorgesehen sein, dass die Erklärungskarte derart gewählt wird, dass einer Kostenfunktion L (Englisch: "loss function") optimiert wird. Mit anderen Worten baut das vorgeschlagene Verfahren auf einem Optimierungsproblem mit Nebenbedingung auf, also z.B.

$$s_x^* = \underset{s_x}{\operatorname{argmin}}(L)\,;\; s_x^{(0)} = x;\; wobei: \; h^l(s_x) \leq h^l(x)\,\forall l;\qquad(1)$$

Gleichung (1) kann vorteilhafterweise mittels einer Maske b gelöst werden, die beispielsweise multiplikativ sein kann, also $s_x = x \cdot b$, wobei b $\in [0,1]$ optimiert wird, vorteilhafterweise mit einer Startbedingung b(0)=1. Alternativ kann die Maske b auch additiv sein, also $s_x = x + b$,, wobei b optimiert wird mit der Startbedingung b(0)=0. Wird die optimierte Maske mit b* bezeichnet, ergibt sich für die Lösung des Optimierungsproblems aus Gleichung (1) $s_x^* = x \cdot b^*$ bzw. $s_x^* = x + b^*$.

In dem Optimierungsproblem wird ausgehend von einem Bild x, eine Erklärungskarte bzw. Darstellung $s_x^*$ gesucht, die bestimmte Eigenschaften erfüllt. Diese Eigenschaften lassen sich mit der Kostenfunktion besonders einfach und flexibel darstellen.

Der Zusammenhang zwischen dem Bild x und der Darstellung $s_x^*$ kann dann durch den initialen Zustand $s_x^{(0)}$ von $s_x$ (bzw. durch einen entsprechende Startbedingung der Maske b), sowie durch die Nebenbedingung der Optimierung definiert werden. Eine mögliche Ausführungsform ist, dass die Darstellung $s_x^*$ nur Merkmale enthält, die auch im Bild x enthalten sind. Der initiale Zustand kann somit $s_x^{(0)} = x$ sein, die Nebenbedingung, die vorteilhafterweise für jede ReLU-Schicht des tiefen neuronalen Netzes eingehalten werden soll, kann $h^l(s_x) \leq h^l(x)$ sein, wobei $h^l$ die Aktivierung der l'ten ReLU-Schicht des tiefen neuronalen Netzes ist (wobei an Stelle einer ReLU-Funktion selbstverständlich auch andere Aktivierungsfunktionen verwendet werden können).

Vorteilhafterweise weist die Kostenfunktion mehrere (additive) Anteile auf, also $L = L_h + L_w + L_c$. Die additiven Anteile können selbstverständlich durch Parameter unterschiedlich gewichtet sein, diese Parameter können aber auch in die Definition der Anteile integriert sein. Beim Lösen des Optimierungsproblems aus Gleichung (1) können diese gewichtenden Parameter optional mit angepasst werden. Ein erster Anteil $L_h = l_h(s_x)$ kann so gewählt werden, dass er charakterisiert, wie viele Pixel des Bildes verändert sind. Beispielsweise kann dieser Anteil durch die L1-Norm $l_h(s_x) = \|s_x - x\|_1$ gegeben sein. Alternativ kann dieser Anteil durch die L1-Norm $\|1 - b\|_1$ der multiplikativen Maske b für $s_x = x \cdot b$ (b $\in [0,1]$) verwendet werden. Dieser Anteil würde dann bewirken, dass alle irrelevanten Pixel aus x in $s_x$ unverändert enthalten sind.

Alternativ kann der zweite Anteil bereichsweise, insbesondere pixelweise, durch eine Funktion geschieht, die charakterisiert, wie sehr ein jeweiliger Pixel zu dem Klassifikationsergebnis, das sich für das Bild ergibt, beiträgt. Diese Funktion kann beispielsweise durch eine Logit-Funktion $f_{logit}^i$ einer Klasse i gegeben sein, sodass der entsprechende Anteil der Kostenfunktion dann gegeben ist durch $l_w = f_{logit}^i(s_x|\theta)$. D.h. der zweite Anteil ist gegeben durch die Wahrscheinlichkeit der Klasse i (bei Minimierung der Wahrscheinlichkeit der Klasse i). Alternativ kann sie durch eine Funktion gegeben sein, die alle Pixel bestimmt, die ein Merkmal i aktivieren. Bezeichnet $f_l^i$ eine i-te Merkmalskarte der l-ten Schicht, so kann der zugehörige Term der Kostenfunktion gegeben sein durch $l_w = \|f_l^i(s_x|\theta)\|_1$. Andere Normen sind möglich, beispielsweise eine L2-Norm.

Die Realisierung der Nebenbedingung, dass die Aktivierung durch die Erklärungskarte die Aktivierung durch das Bild im Wesentliche nicht übersteigt kann durch den Optimierungsansatz besonders einfach durch einen dritten Anteil $L_c$ in der Kostenfunktion realisiert werden, der ein solches Übersteigen bestraft, also z.B. $L_c = \|maximum(h^l(s_x) - h^l(x), 0)\|_1$. Andere Normen sind möglich, beispielsweise eine L2-Norm.

Alternativ wird die Erfüllung dieser Nebenbedingung dadurch erreicht, dass die Aktivierungen $h_l(s_x)$ in der Merkmalskarte beim Ermitteln der Erklärungskarte auf einen vorgebbaren Wert, insbesondere auf den gemäß der Nebenbedingung maximal zulässigen Wert gesetzt wird, beispielsweise durch $h'_l(s_x) = min(h_l(x), h_l(s_x))$. Wird ein Gradienten-basiertes Optimierungsverfahren benutzt, kann ein entsprechender Gradient $\delta_l$ in der Rückwärts-Propagation (Englisch: "backpropagation") dann gegeben sein durch $\delta'_l = \delta_l \cdot [h_l(s_x) < h_l(x)]$. Die Notation [...] bedeutet hierbei in üblicher Weise, dass der Wert = 1 ist, wenn die Bedingung erfüllt ist und = 0, wenn sie nicht erfüllt ist.

Alternativ wird die Einhaltung der Nebenbedingung dadurch erreicht, dass beim Einsatz des Gradienten-basierten Optimierungsverfahrens der Gradient $\delta_l$ der Rückwärts-Propagation einer Merkmalskarte $h_l$ einer Schicht mit Aktivierungsfunktionen, insbesondere einer ReLU-Schicht, (d.h. der am Ausgang der Aktivierungsfunktion anliegende Gradient) des tiefen neuronalen Netzes gleich einem vorgebbaren Gradientenwert, insbesondere gleich Null gesetzt wird, wenn die Aktivierung $h_l(s_x)$ durch die Erklärungskarte $s_x$ die Aktivierung $h_l(x)$ durch das Bild x in der Schicht übersteigt, also z.B. $\delta'_l = \delta_l \cdot [h_l(s_x) < h_l(x)]$.

Die so ermittelte Erklärungskarte kann nun vorteilhafterweise ermittelt und angezeigt werden, insbesondere neben dem Bild. Durch die ortsgetreue Auflösung und die Auswahl nur der irrelevanten Pixel ist es somit möglich, eine Darstellung zu generieren, die einer Überprüfung durch einen menschlichen Experten, insbesondere einen Mediziner, zugänglich ist.

Nachfolgend werden Ausführungsformen der Erfindung unter Bezugnahme auf die beiliegenden Zeichnungen näher erläutert. In den Zeichnungen zeigen:

Figur 1     schematisch einen Aufbau von Ausführungsformen der Erfindung;

Figur 2     in einem Flussdiagramm den Ablauf des Verfahrens gemäß eines Aspekts der Erfindung.

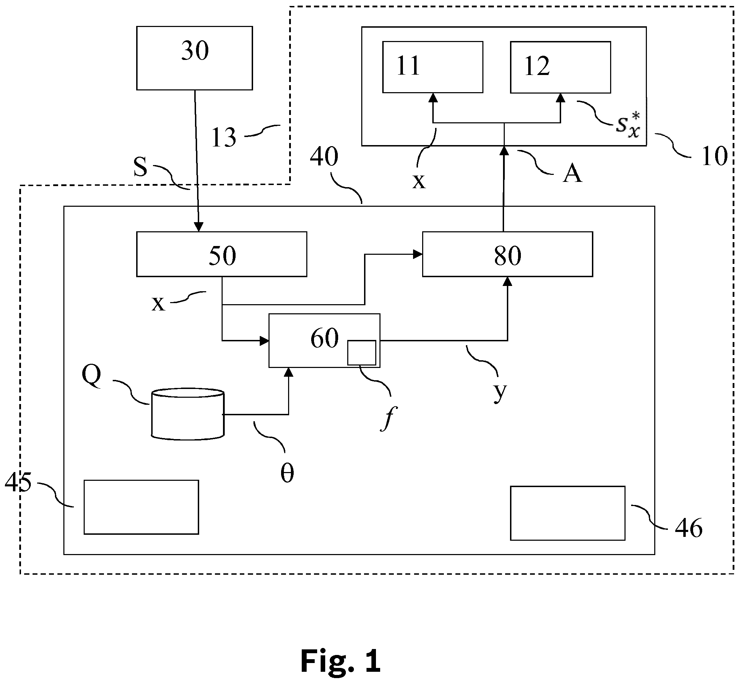

Figur 1 zeigt in einer bevorzugten Ausführungsform der Erfindung ein maschinelles Klassifikationssystem 40, das eingerichtet ist, die Erfindung auszuführen. Das maschinelle Klassifikationssystem 40 umfasst einen Computer 45 und ein maschinenlesbares Speichermedium 46. Es umfasst ferner ein maschinelles Lernsystem 60, welches aus einem ihm zugeführten Bild x ein Ausgangssignal y ermittelt. Das Bild x kann beispielsweise über eine optionale Eingangsschnittstelle 50 aus einem Sensorsignal S ermittelt werden, das von einem bildgebenden Sensor 30 ermittelt wurde.

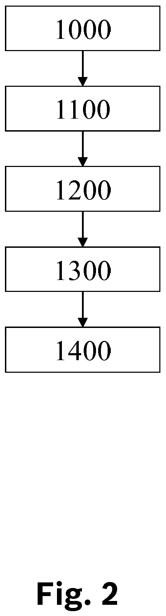

Das maschinelle Lernsystem ermittelt mittels eines tiefen neuronalen Netzes f eine Klassifikation $f(x|\theta)$ des Bildes x. Das tiefe neuronale Netz f ist hierbei parametriert mit Parametern $\theta$, die in einem Parameterspeicher Q hinterlegt sind. Das maschinelle Lernsystem 60 ermittelt ferner eine Erklärungskarte $s_x^*$, z.B. mit dem in Figur 2 illustrierten Verfahren. Erklärungskarte $s_x^*$ und Klassifikation $f(x|\theta)$ bilden zusammen das Ausgangssignal y, aus dem gemeinsam mit dem Bild x ein Ansteuersignal A ermittelt wird, beispielsweise mit einer optionalen Ausgangsschnittstelle 80. Das Ansteuersignal A kann beispielsweise Erklärungskarte $s_x^*$, Klassifikation $f(x|x\theta)$ und Bild x umfassen. Das Ansteuersignal wird dann einer Anzeigeeinheit 10 zugeführt, die beispielsweise zwei Monitore 11, 12 umfasst. Dem ersten Monitor 11 wird das Bild x zugeführt und angezeigt, dem zweiten Monitor 12 wird die Erklärungskarte $s_x^*$ zugeführt und angezeigt. Optional kann ebenfalls die Klassifikation $f(x|\theta)$ angezeigt werden.

Figur 2 illustriert eine Ausführungsform des Verfahrens zum Ermitteln der Erklärungskarte $s_x^*$. Zunächst (1000) wird das tiefe neuronale Netz f trainiert, beispielsweise, um in Bildern verschiedene Krankheitsbilder diskriminieren zu können. Dann (1100) wird für ein dem maschinellen Lernsystem 60 zugeführtes Bild x mittels des tiefen neuronalen Netzes f eine Klassifikation $f(x|\theta)$ des Bildes x ermittelt. Diese Schritte sind nicht zwingend Teil des erfindungsgemäßen Verfahrens, sondern bestimmen dessen Kontext und können beispielsweise im Vorfeld von separaten Einheiten ausgeführt worden sein.

Im Anschluss (1200) wird ein initialer Wert $s_x^{(0)}$ der Erklärungskarte festgelegt, z.B. $s_x^{(0)} = x$. Dann (1300) wird das durch Formel (1) definierte Optimierungsproblem gelöst, vorzugsweise mit einem Gradientenabstiegsvefahren, um die Erklärungskarte $s_x^*$ zu bestimmen.

Erklärungskarte $s_x^*$ und Bild x werden dann (1400) den Monitoren 11, 12 zugeführt und wie beschrieben auf diesen angezeigt. Damit endet das Verfahren.

In einer anderen Ausführungsform ist der bildgebende Sensor 30 in einer Fertigungsanlage implementiert. Das Verfahren kann dann dazu genutzt werden, über die Anzeigeeinheit Ausschussteile für einen menschlichen Operator erfassbar darzustellen, sodass dieser über die Anzeige auf der Anzeigeeinheit 10 überhaupt in die Lage versetzt wird, zu erkennen, ob tatsächlich ein Ausschussteil vorliegt.

In einer weiteren Ausführungsform ist an Stelle des bildgebenden Sensors 30 eine beliebige Bilderfassungseinheit, vorgesehen, die ein bildgebender Sensor 30 sein kann, oder die beispielsweise Bilder aus einer Datenbank lädt und bereitstellt. Das Verfahren kann dann zum Überprüfen der Funktionsfähigkeit des tiefen neuronalen Netzes $f$ eingesetzt werden, um einen menschlichen Entwickler in die Lage zu versetzen, über die Anzeige auf der Anzeigeeinheit 10 analysieren zu können, welche Bildregionen zu einer möglichen Fehlklassifikation geführt haben.

In einer noch weiteren Ausführungsform ist der bildgebende Sensor 30 Teil eines Überwachungssystems. Durch die Anzeige auf der Anzeigeeinheit 10 wird ein menschlicher Experte in die Lage versetzt, zu erkennen, ob vom maschinellen Lernsystem 60 mutmaßlich erkannte anomale Szene (z.B. ein herrenloser Koffer) tatsächlich vorliegt.

Es versteht sich für den Fachmann, dass der Computer 46 auch durch eine Mehrzahl von Computern gegeben sein kann, und das maschinenlesbare Speichermedium 45 durch eine Mehrzahl maschinenlesbarer Speichermedien.

## Patentansprüche

1. Computerimplementiertes Verfahren zum Ermitteln einer Erklärungskarte $s_x^*$ eines Bildes x, in der all jene Pixel des Bildes x verändert sind, die maßgeblich für eine mit einem tiefen neuronalen Netz $f$ ermittelte Klassifikation des Bildes x sind,

   wobei die Erklärungskarte $s_x^*$ derart gewählt wird, dass ein Optimierungsproblem mit Nebenbedingung für einer Kostenfunktion L optimiert wird:

$$s_x^* = \operatorname*{argmin}_{s_x}(L)\,;\ s_x^{(0)} = x;\ wobei: \ h^l(s_x) \le h^l(x)\ \forall l$$

   wobei das Optimierungsproblem mittels einer Maske b gelöst wird, die entweder multiplikativ, also $s_x = x \cdot b$, wobei $b \in [0,1]$ optimiert wird, oder additiv, also $s_x = x + b$, wobei b optimiert wird mit der Startbedingung b(0) = 0, ist;

   wobei die Erklärungskarte $s_x^*$ derart gewählt wird, sodass eine möglichst kleine Untermenge der Pixel des Bildes x verändert werden und die Erklärungskarte $s_x^*$ dann, wenn sie dem tiefen neuronalen Netz $f$ zur Klassifikation zugeführt wird, möglichst nicht zum gleichen Klassifikationsergebnis $f(s_x^*|\theta)$ führt wie das Bild x indem mögliche Klassifikationsergebnisse jeweils eine Wahrscheinlichkeit p zugeordnet wird, und dass eine Wahrscheinlichkeit des gleichen Klassifikationsergebnisses minimiert wird, und sodass eine durch die Erklärungskarte $s_x^*$ hervorgerufene Aktivierung $h^l(s_x^*)$ eine durch das Bild $x$ hervorgerufene Aktivierung $h^l(s_x^*)$ dann im Wesentlichen nicht übersteigt,

   wobei die Kostenfunktion L einen ersten Anteil ($L_h$) aufweist, wobei der erste Anteil ($L_h$) durch eine L1 -Norm gegeben ist: $l_h(s_x) = \|s_x\|_1$ der charakterisiert, wie viele Pixel des Bildes x verändert sind, und

   wobei die Kostenfunktion $L$ einen zweiten Anteil ($L_w$) aufweist, wobei der zweite Anteil pixelweise durch eine Funktion geschieht, die charakterisiert wie hoch die Wahrscheinlichkeit ist, dass das Klassifikationsergebnis für die Erklärungskarte $s_x^*$ dem Klassifikationsergebnis für das Bild x entspricht, und

   wobei die Nebenbedingung $h^l(s_x) \le h^l(x)$, dass für alle Aktivierungsfunktions-Schichten eine Aktivierung $h_l(s_x)$ der l'ten-Aktivierungsfunktions-Schicht tiefen neuronalen Netz $f$ durch die Erklärungskarte $s_x$ eine Aktivierung $h_l(x)$ der l'ten-Aktivierungsfunktions-Schicht des tiefen neuronalen Netzes $f$ durch das Bild $x$ nicht übersteigt, dadurch erreicht wird,

   dass ein dritter Anteil ($L_c$) in der Kostenfunktion $L$ realisiert wird, der ein solches Übersteigen bestraft, oder dadurch erreicht wird,

   dass die Aktivierung $h_l(s_x)$ der jeweiligen l'ten-Aktivierungsfunktions-Schicht beim Ermitteln der Erklä-

rungskarte $s_x$ auf einen vorgebbaren Wert, insbesondere den gemäß der Nebenbedingung maximal zulässigen Aktivierung $h_l(x)$, gesetzt wird, oder dadurch erreicht wird, dass ein Gradienten-basiertes Optimierungsverfahren eingesetzt wird und ein Gradient ($\delta_l$) einer Rückwärts-Propagation (Englisch: "backpropagation") der Aktivierung $h_l(s_x)$ einer Schicht $l$ des tiefen neuronalen Netzes gleich einem vorgebbaren Gradienten, insbesondere gleich Null, gesetzt wird, wenn die Aktivierung durch die Erklärungskarte $s_x$ die Aktivierung $h_l(x)$ durch das Bild x in der Schicht übersteigt.

2. Verfahren zum Anzeigen eines Bildes, wobei mit dem Verfahren nach Anspruch 1 die Erklärungskarte ermittelt und angezeigt wird,

3. Verfahren nach Anspruch 2, wobei auch das Bild x, insbesondere neben der Erklärungskarte, angezeigt wird.

4. Computerprogramm, das eingerichtet ist, das Verfahren nach einem der Ansprüche 1 bis 3 auszuführen.

5. Ein- oder Mehrzahl maschinenlesbarer Speichermedien (45), auf der das Computerprogramm nach Anspruch 4 gespeichert ist.

6. Vorrichtung, die eingerichtet ist, das Verfahren nach einem der Ansprüche 1 bis 3 auszuführen.

7. Anzeigesystem (13), das eingerichtet ist, das Verfahren nach einem der Ansprüche 2 oder 3 auszuführen.


**Claims**

1. Computer-implemented method for determining an explanation map $s_x^*$ of an image $x$, in which map all those pixels of the image $x$ which are crucial for a classification of the image $x$ determined by means of a deep neural network $f$ are changed,

   wherein the explanation map $s_x^*$ is selected in such a way as to optimize an optimization problem with a constraint for a loss function $L$:

$$s_x^* = \underset{s_x}{argmin}(L); \; s_x^{(0)} = x; \; \texttt{where:} \; h^l(s_x) \leq h^l(x) \forall l$$

   wherein the optimization problem is solved by means of a mask $b$, which is either multiplicative, i.e. $s_x = x \cdot b$, where $b \in [0,1]$ is optimized, or additive, i.e. $s_x = x + b$, where $b$ is optimized, with the start condition $b(0) = 0$;

   wherein the explanation map $s_x^*$ is selected such that a smallest possible subset of the pixels of the image x is changed and the explanation map $s_x^*$, when fed to the deep neural network $f$ for classification, as far as possible does not lead to the same classification result $f(s_x^*|\theta)$ as the images by virtue of possible classification results each being assigned a probability p, and that a probability of the same classification result is minimized, and such that an activation $h^l(s_x^*)$ caused by the explanation map $s_x^*$ then substantially does not exceed an activation $h^l(s_x^*)$ caused by the image $x$,
   wherein the loss function L has a first component ($L_h$), wherein the first component ($L_h$) is given by an **L1· norm**: $l_h(s_x) = \|s_x\|_1$, which characterizes how many pixels of the image x are changed, and
   wherein the loss function $L$ has a second component ($L_w$), wherein the second component is implemented pixel by pixel by way of a function which characterizes how high a probability there is that the classification result for the explanation map $s_x^*$ corresponds to the classification result for the image $x$, and
   wherein the constraint $h^l(s_x) \leq h^l(x)$ that, for all activation function layers, an activation $h_l(s_x)$ of the l-th activation function layer in the deep neural network $f$ by the explanation map $s_x$ does not exceed an activation $h_l(x)$ of the l-th activation function layer of the deep neural network $f$ by the image $x$ is achieved by virtue of the fact that a third component ($L_c$) is realized in the loss function $L$, said third component penalizing such exceeding, or is achieved by virtue of the fact

that the activation $h_l(s_x)$ of the respective l-th activation function layer, when determining the explanation map $s_x$, is set to a predefinable value, in particular the maximum permissible activation $h_l(x)$ in accordance with the constraint, or is achieved by virtue of the fact
that a gradient-based optimization method is used and a gradient ($\delta_l$) of a backpropagation of the activation $h_l(s_x)$ of a layer $l$ of the deep neural network is set to be equal to a predefinable gradient, in particular equal to zero, if the activation by the explanation map $s_x$ exceeds the activation $h_l(x)$ by the image $x$ in the layer.

2. Method for displaying an image, wherein by means of the method according to Claim 1 the explanation map is determined and is displayed.

3. Method according to Claim 2, wherein the image x is also displayed, in particular alongside the explanation map.

4. Computer program configured to carry out the method according to any of Claims 1 to 3.

5. One or a plurality of machine-readable storage media (45) on which the computer program according to Claim 4 is stored.

6. Device configured to carry out the method according to any of Claims 1 to 3.

7. Display system (13) configured to carry out the method according to either of Claims 2 and 3.

**Revendications**

1. Procédé mis en œuvre par ordinateur, permettant de déterminer une carte descriptive $s_x^*$ d'une image x sur laquelle tous les pixels de l'image x sont modifiés qui sont déterminants pour une classification de l'image x déterminée par un réseau neuronal profond $f$,

dans lequel la carte descriptive $s_x^*$ est sélectionnée de telle sorte qu'un problème d'optimisation à condition secondaire soit optimisé pour une fonction de coût L :

$$s_x^* = \frac{argmin(L)}{s_x}; \ s_x^{(0)} = x \ ; \ \text{où} \ : \ h^l(s_x) \leq h^l(x)\forall l$$

dans lequel le problème d'optimisation est résolu au moyen d'un masque b qui est optimisé soit par multiplication, donc $s_x = x \cdot b$, où $b \in$ **[0,1],** soit par addition, donc $s_x = x + b$, où b est optimisé avec la condition de départ b(0) = 0 ;
dans lequel la carte descriptive $s_x^*$ est sélectionnée de telle sorte qu'un sous-ensemble aussi petit que possible des pixels de l'image x soit modifié, et que la carte descriptive $s_x$, lorsqu'elle est amenée au réseau neuronal profond $f$ pour la classification, n'aboutisse dans la mesure du possible pas au même résultat de classification $f(s_x^*|\theta)$ que l'image x en ce que des résultats de classification possibles sont respectivement associés à une probabilité p, et en ce qu'une probabilité du même résultat de classification soit minimisée, et de sorte qu'une activation $h^l(s_x^*)$ provoquée par la carte descriptive $s_x^*$ ne dépasse alors pas substantiellement une activation $h^l(s_x^*)$ provoquée par l'image x,
dans lequel la fonction de coût L présente une première part ($L_h$), la première part ($L_h$) étant donnée par une norme L1 : $l_h(s_x) = \|s_x\|_1$, qui caractérise combien de pixels de l'image x ont changé, et
dans lequel la fonction de coût L présente une deuxième part ($L_w$), la deuxième part étant réalisée pixel par pixel par une fonction, qui caractérise le niveau de probabilité que le résultat de classification pour la carte descriptive $s_x^*$ corresponde au résultat de classification pour l'image x, et
dans lequel la condition secondaire $h^l(s_x) \leq h^l(x)$ que pour toutes les couches de fonction d'activation une activation $h_l(s_x)$ de la l-ème couche de fonction d'activation du réseau neuronal profond $f$ par la carte descriptive $s_x$ ne

dépasse pas une activation $h_l(x)$ de la l-ème couche de fonction d'activation du réseau neuronal profond $f$ par l'image x est obtenue

en ce qu'une troisième part ($L_c$) dans la fonction de coût $L$ est réalisée qui sanctionne un tel dépassement, ou est obtenue

en ce que lors de la détermination de la carte descriptive $s_x$, l'activation $h_l(s_x)$ de la l-ème couche de fonction d'activation respective est initialisée à une valeur prédéfinissable, en particulier l'activation $h_l(x)$ admissible au maximum selon la condition secondaire, ou est obtenue

en ce qu'un procédé d'optimisation à base de gradient est mis en oeuvre, et un gradient ($\delta_l$) d'une rétropropagation (en anglais : « back propagation ») de l'activation $h_l(s_x)$ d'une couche / du réseau neuronal profond est initialisé à un gradient prédéfinissable, en particulier à zéro, lorsque l'activation par la carte descriptive $s_x$ dépasse l'activation $h_l(x)$ par l'image x dans la couche.

2. Procédé d'affichage d'une image, dans lequel le procédé selon la revendication 1 détermine et affiche la carte descriptive.

3. Procédé selon la revendication 2, dans lequel aussi l'image x est également affichée, en particulier à côté de la carte descriptive.

4. Programme informatique qui est conçu pour exécuter le procédé selon l'une quelconque des revendications 1 à 3.

5. Un ou plusieurs supports de stockage ou lisibles par machine (45) sur lesquels est stocké le programme informatique selon la revendication 4.

6. Dispositif qui est conçu pour exécuter le procédé selon l'une quelconque des revendications 1 à 3.

7. Système d'affichage (13) qui est conçu pour exécuter le procédé selon l'une des revendications 2 ou 3.

**Fig. 1**

```
┌──────────────┐
│     1000     │
└──────────────┘
        │
        ▼
┌──────────────┐
│     1100     │
└──────────────┘
        │
        ▼
┌──────────────┐
│     1200     │
└──────────────┘
        │
        ▼
┌──────────────┐
│     1300     │
└──────────────┘
        │
        ▼
┌──────────────┐
│     1400     │
└──────────────┘
```

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018205561